# EUROPÄISCHE PATENTSCHRIFT

(11) **EP 2 114 225 B1**
(45) Veröffentlichungstag und Bekanntmachung des Hinweises auf die Patenterteilung: **06.10.2010**
(21) Anmeldenummer: 08701333.0
(22) Anmeldetag: 09.01.2008
(51) Int. Cl.: A47J 43/08, F16C 17/10, F16C 33/10

(54) **GLEITLAGER FÜR EIN HAUSHALTSGERÄT**
SLIDING BEARING FOR A HOUSEHOLD APPLIANCE
PALIER À GLISSEMENT DESTINÉ À UN APPAREIL MÉNAGER

(30) Priorität: 01.02.2007 DE 102007005111
(43) Veröffentlichungstag der Anmeldung: 11.11.2009
(73) Patentinhaber: BSH Bosch und Siemens Hausgeräte GmbH, 81739 München (DE)
(72) Erfinder: ZIBRET, Igor, 3327 Smartno ob Paki (SI); PAVLOVIC, Henrik, 3333 Ljubno ob Savinji (SI); MAZEJ, Stanislav, 3303 Gomilsko (SI)
(86) Internationale Anmeldenummer: PCT/EP2008/050168
(87) Internationale Veröffentlichungsnummer: WO 2008/092715

(56) Entgegenhaltungen:
- DE-A1- 10 244 714
- US-A- 4 795 275

## Beschreibung

### Hintergrund der Erfindung

Die vorliegende Erfindung betrifft ein Gleitlager zum drehbaren Lagern einer Welle in einem Haushaltsgerät gemäß dem Oberbegriff des Anspruchs 1 und ein Haushaltsgerät gemäß dem Oberbegriff des Anspruchs 10.

### Stand der Technik

Aus der deutschen Patentanmeldung DE 102 44 714 A1 ist eine Lagervorrichtung einer Abtriebseinheit eines Küchengerätes für ein Arbeitswerkzeug bekannt. Die Lagervorrichtung weist eine Lagerbuchse mit einer im Querschnitt U-förmigen Ringnut auf und einen radialsymmetrischen Kupplungskörper, der in der Lagerbuchse drehbar gelagert ist. Die Lagerbuchse und der Kupplungskörper umfassen jeweils eine radial orientierte und zwei axial orientierte Gleitflächen, so dass der Kupplungskörper in der Lagerbuchse axial und zweifach radial gelagert ist. Der Kupplungskörper ist einteilig mit einem Zahnrad und einer Abtriebskupplung verbunden. An einer gestuften Motorwelle kann der Kupplungskörper ebenfalls axial und radial gelagert sein.

### Der Erfindung zugrundeliegende Aufgabe

Es ist wünschenswert, ein verbessertes Gleitlager für ein Haushaltsgerät bereitzustellen, das aus möglichst wenigen Einzelteilen besteht. Das Gleitlager soll einfach aufgebaut und kostengünstig herstellbar sein.

### Erfindungsgemäße Lösung

Zu Lösung der Aufgabe lehrt die Erfindung ein Gleitlager mit den Merkmalen des Anspruchs 1 und ein Haushaltsgerät mit den Merkmalen des Anspruchs 10.

Mit dem Begriff "schmal" ist in den vorliegenden Ansprüchen und der Beschreibung eine Breite des Gleitringes bzw. der Ringnut bezeichnet. Die Breite des Gleitrings ist die Differenz zwischen Innen- und Außendurchmesser. Die Breite der Ringnut ist der Abstand zwischen den Nutwangen.

Dadurch, dass der Gleitring einen schmaleren und einen breiteren Abschnitt aufweist, können vorteilhafterweise der breitere Abschnitt Radiallagerflächen und der schmalere Abschnitt ein Depot für einen Schmiermittel, bevorzugt ein Lagerfett bilden. Genauso kann vorteilhafterweise auch, wenn die Ringnut einen schmaleren und einen breiteren Abschnitt aufweist, der schmalere Abschnitt eine Radiallagerfläche und der breitere Abschnitt ein Depot für Schmiermittel. bilden. Es ist ein erreichbarer Vorteil der Erfindung, dass das Lager einfach aufgebaut ist. Insbesondere kann auf einen gesonderten Lagerstift verzichtet werden. Dies kann eine preiswerte Konstruktion und eine schnelle und einfache Montage des Haushaltsgeräts ermöglichen.

### Bevorzugte Ausgestaltung der Erfindung

Vorteilhafte Aus- und Weiterbildungen, welche einzeln oder in Kombination miteinander eingesetzt werden können, sind Gegenstand der abhängigen Ansprüche.

Bei einem bevorzugten Gleitlager weist der Gleitring in der Ringnut entlang seiner Symmetrieachse einen ersten Ringabschnitt auf, in dem der Gleitring schmaler ist als in einem zweiten Ringabschnitt. Die Ringnut weist vorzugsweise entlang ihrer Symmetrieachse einen ersten Nutabschnitt auf, in dem die Nut schmaler ist als in einem zweiten Nutabschnitt. Es ist ein erreichbarer Vorteil dieser Ausführung der Erfindung, dass die Ring- und Nutabschnitte zusammenwirken, um gemeinsam mehrere Lagerabschnitte zu bilden, die als Lagerflächen oder als Schmiermitteldepots ausgebildet sein können. Der Übergang von einem schmaleren zu einem breiteren Abschnitt des Gleitrings oder der Ringnut kann kontinuierlich oder in Stufen erfolgen.

Bevorzugt sind in dem erfindungsgemäßen Gleitlager die Nutabschnitte und Ringabschnitte so angeordnet, dass in einem ersten Lagerabschnitt der schmale Ringabschnitt in dem schmalen Nutabschnitt, in einem zweiten Lagerabschnitt der schmale Ringabschnitt in dem breiten Nutabschnitt und in einem dritten Lagerabschnitt der breite Ringabschnitt in dem breiten Nutabschnitt angeordnet ist. Bei dieser Ausführungsform kann vorteilhafterweise der zweite Lagerabschnitt als Schmiermitteldepot dienen, das von den ersten und zweiten Lagerabschnitten eingeschlossen ist, in denen der Gleitring und die Ringnut die Radiallagerflächen des Gleitlagers bilden. Es sind aber auch andere Ausführungsformen denkbar, bei denen der zweite Lagerabschnitt eine Lagerfläche zwischen dem Gleitring und der Ringnut ausbildet und der erste und der dritte Lagerabschnitt jeweils ein Schmiermitteldepot aufweisen.

In einem bevorzugten Gleitlager ist der erste Ringabschnitt näher am Nutgrund der Ringnut angeordnet als der zweite Ringabschnitt und der erste Nutabschnitt ist näher am Nutgrund der Ringnut angeordnet als der zweite Nutabschnitt. Dies kann vorteilhaft das Einsetzen des Gleitrings in die Ringnut erleichtern.

In einem bevorzugten Gleitlager umschließt die Ringnut einen mittig angeordneten Zapfen mit einer geschlossenen oberen Fläche. Der Gleitring weist vorzugsweise einen dritten Ringabschnitt oberhalb der Ringnut auf, um zusammen mit der geschlossenen oberen Fläche des Zapfens ein Schmiermitteldepot oberhalb der Ringnut zu bilden. Es ist ein erreichbarer Vorteil dieser Ausführung der Erfindung, dass ein weiteres Schmiermitteldepot auf der oberen Fläche des Zapfens gebildet werden kann. Insbesondere kann dieses Depot Schmiermittel für die zweiten Lagerflächen bereitstellen. Das Schmiermitteldepot kann außerdem vorteilhafterweise durch Wahl seiner Geometrie, insbesondere des Durchmessers des Zapfens, ein größeres Volumen aufweisen als die Schmiermitteldepots an den seitlichen Ring- bzw. Nutabschnitten.

Bevorzugt ist bei einem Gleitlager an der Ringnut oberhalb des zweiten Nutabschnittes an diesen anschließend ein achsparallel zur Symmetrieachse verlaufender Wandabschnitt angeordnet. Vorzugsweise ist ein radialer Hohlraum zwischen dem dritten Ringabschnitt und dem Wandabschnitt zur Aufnahme von Schmiermittel vorgesehen. Ist der Wandabschnitt breiter als die Ringnut, kann oberhalb der Ringnut zusammen mit dem dritten Ringabschnitt der radiale Hohlraum als Schmiermitteldepot ausgebildet sein. Ist der dritte Ringabschnitt schmaler als der zweite Ringabschnitt und der Wandabschnitt gleich oder breiter als der zweite Nutabschnitt, kann der radiale Hohlraum als Ausnehmung in dem Gleitring ausgebildet sein. Dieser als Schmiermitteldepot dienende Hohlraum korrespondiert mit dem oben erwähnten weiteren Schmiermitteldepot oberhalb des Zapfens. Es ist ein erreichbarer Vorteil dieser Ausführung der Erfindung, dass dadurch, dass der Hohlraum auf der Außenseite des Ringes angeordnet ist, auf einfache Weise Schmiermittel in den Hohlraum eingebracht werden und das Schmiermitteldepot aufgefüllt werden kann. Über die zweite Lagerfläche kann der Schmiermittel sich im Gleitlager verteilen.

Bei einem bevorzugten Gleitlager weist der Gleitring oberhalb. seines dritten Ringabschnittes ein den radialen Hohlraum nach oben abdeckendes sich senkrecht zur Symmetrieachse erstreckendes Wandelement auf, wobei der Wandabschnitt vorzugsweise in Richtung der Symmetrieachse gesehen unterhalb des Wandelements angeordnet ist. Vorteilhafterweise ist das Schmiermitteldepot nach oben hin abgedeckt, sodass keine Feuchtigkeit und/oder keine Partikel in das Schmiermitteldepot gelangen und dann in das Gleitlager dringen können.

Bei einem bevorzugten Gleitlager sind der Gleitring und die Abtriebswelle einstückig ausgebildet oder der Gleitring und das Wandelement sind drehfest mit der Abtriebswelle koppelbar. Vorzugsweise ist die Ringnut in einem Bodenelement des Haushaltsgerätes angeordnet. Es ist ein erreichbarer Vorteil dieser Ausführung der Erfindung, dass die Abtriebswelle als Komplettelement einfach und schnell in die Gleitringaufnahme eingesetzt werden kann. Da die Ringnut im Bodenelement ausgebildet ist, gibt es keine einzelnen Lagerteile, die sich beispielsweise durch während des Betriebs auftretende Erschütterungen vom Bodenelement lösen können.

Das erfindungsgsmäße Gleitlager wird vorzugsweise in einem Haushaltsgerät eingesetzt, besonders vorzugsweise in einer Küchenmaschine zum rotierenden Antreiben eines Werkzeugs. Das Werkzeug kann beispielsweise ein Schlagwerkzeug, bevorzugt ein Rührwerkzeug, aufweisend mindestens einen Quirl oder einen Knethaken, ein Raspelmesser, eine Saftpresse und/oder ein Mixbecher sein. Ferner kann das Werkzeug eine Getreidemühle sein. Besonders vorzugsweise ist das Werkzeug auswechselbar. Hierdurch kann die Küchenmaschine Vorteilhafterweise als Universalküchenmaschine weitergebildet sein.

Das erfindungsgemäße Haushaltsgerät umfasst vorzugsweise ein Gehäuse mit einem Bodenelement, einen Motor und eine Abtriebswelle, die in dem Gleitlager gelagert ist. Vorzugsweise ist die Ringnut im Bodenelement ausgebildet. Der Gleitring ist vorzugsweise einstückig mit einem eine Abtriebswelle aufweisenden Abtriebszahnrad ausgebildet. Es ist ein erreichbarer Vorteil dieser Ausführung der Erfindung, dass die Anazahl der teile der Küchenmaschine gering gehalten werden kann. Dies kann die Herstellung des Haushaltsgeräts vereinfachen und Herstellungskosten sparen. Der Motor ist vorzugsweise ein Elektromotor.

Bei dem bevorzugten Haushaltsgerät ist das Gleitlager ein erstes Gleitlager des Haushaltsgerätes und es ist ein zweites erfindungsgemäßes Gleitlager zur Lagerung einer zweiten Welle vorgesehen, wobei das zweite Gleitlager beabstandet von dem ersten Gleitlager angeordnet ist. Mittels des zweiten Gleitlagers kann zum Beispiel eine zweite Abtriebswelle oder bei einem Haushaltsgerät mit einem Zahnradantrieb ein Zwischenzahnrad gelagert werden. Die Ringnut des zweiten Gleitlagers kann wie die des ersten Gleitlagers im Bodenelement ausgebildet sein.

Bevorzugt lagert das zweite Gleitlager ein Zwischenzahnrad, das ein erstes Zahnrad des Motors mit einem zweiten Zahnrad der Abtriebswelle antriebsmäßig verbindet. Das erste Zahnrad hat vorzugsweise einen kleineren Durchmesser auf als das zweite Zahnrad. Hierdurch kann vorteilhafterweise eine Reduzierung der Drehzahl erreicht werden, das heißt, die Abtriebswelle und damit das Werkzeug können sich mit einer niedrigeren Umdrehungszahl als eine Motorwelle des Motors drehen. Mit der Reduzierung der Drehzahl geht vorteilhafterweise eine Erhöhung des Drehmoments einher. Es sind aber auch Ausführungen der Erfindung denkbar, bei der das erste Zahnrad größer ist als das zweite Zahnrad, um eine Erhöhung der Drehzahl des Bearbeitungswerkzeugs zu erreichen. Die bevorzugten Zahnräder sind Stirnzahnräder.

Bevorzugt sind das erste Zahnrad, das zweite Zahnrad und das Zwischenzahnrad in einer horizontalen Ebene angeordnet. Hierdurch kann, vorteilhafterweise in Richtung der Erstreckung der Achsen der Antriebs- und der Abtriebswelle gesehen, eine Platz sparende Kupplung zwischen der Antriebswelle und der Abtriebswelle realisiert werden, deren Höhe lediglich durch die Dicke der Zahnräder bestimmt ist. Ferner kann konstruktionsvereinfachend ein vertikaler Versatz der Kupplungslagen der Zahnräder zwischen der Antriebswelle und der Abtriebswelle vermieden werden.

Bei einem bevorzugten Haushaltsgerät ist die Abtriebswelle mittels eines Zahnriemens zur Realisierung eines Riemenantriebs mit dem Motor antriebsmäßig gekoppelt. Mittels des zwischen dem ersten und dem zweiten Zahnrad angeordneten Zahnriemens wird ein Drehmoment des Motors auf die Abtriebswelle übertragen.

Bevorzugt ist in einem Haushaltsgerät eine weitere Abtriebswelle, die achsparallel und beabstandet von der ersten Abtriebswelle angeordnet ist, vorgesehen. An diese kann ein zusätzliches Werkzeugangekoppelt werden, sodass mit einem Motor zwei Bearbeitungswerkzeuge antreibbar sind. Ferner können die beiden Bearbeitungswerkzeuge mit unterschiedlichen Drehzahlen antreibbar sein. Vorzugsweise sind die zweite Abtriebswelle und die Antriebswelle auf derselben Drehachse angeordnet. Dies ist zum Beispiel realisierbar, indem die Antriebswelle mit einer Zusatzwelle verlängert wird, die dann mit dem Bearbeitungswerkzeug, beispielsweise einem Mixeraufsatz, drehfest kuppelbar ist. Die Antriebswelle betätigt die zweite Abtriebswelle vorzugsweise direkt, das heißt ohne zwischengeschaltetes Getriebe. Es ist ein erreichbarer Vorteil dieser Ausführung der Erfindung, dass die zweite Abtriebswelle zum Betreiben eines Werkzeugs eingesetzt werden kann, dass eine höhere Drehzahl benötigt als ein Werkzeug an der ersten Abtriebswelle, die vorzugsweise durch die Übersetzung des erfindungsgemäßen Stirnradgetriebes eine geringere Drehzahl aufweist. Besonders vorzugsweise ist an die zweite Abtriebswelle ein Mixwerkzeug ankuppelbar.

Bevorzugt ist das Gleitlager, insbesondere der Gleitring und/oder das Wandelement und/oder die Ringnut aus einem Kunststoff gefertigt. Vorzugsweise ist das gesamte Bodenelement aus Kunststoff gefertigt. Ein bevorzugter Kunststoff ist Polyamid-Recyclat.

### Kurzbeschreibung der Zeichnungen

Die Erfindung wird im Folgenden anhand schematischer Zeichnungen an einem Ausführungsbeispiel mit weiteren Einzelheiten näher erläutert.

Es zeigen:
- Fig. 1:: Eine Querschnittsdarstellung eines erfindungsgemäßen Gleitlagers für ein Haushaltsgerät;
- Fig. 2:: Eine Querschnittsdarstellung der Antriebseinheit eines ersten Ausführungsbeispiels eines erfindungsgemäßen Haushaltsgerätes mit Zahnradantrieb;
- Fig. 3: Eine perspektivische Ansicht von unten der Antriebseinheit eines zweiten Ausführungsbeispiels eines erfindungsgemäßen Haushaltsgeräts mit Riemenantrieb.

### Ausführliche Beschreibung anhand zweier Ausführungsbeispiele

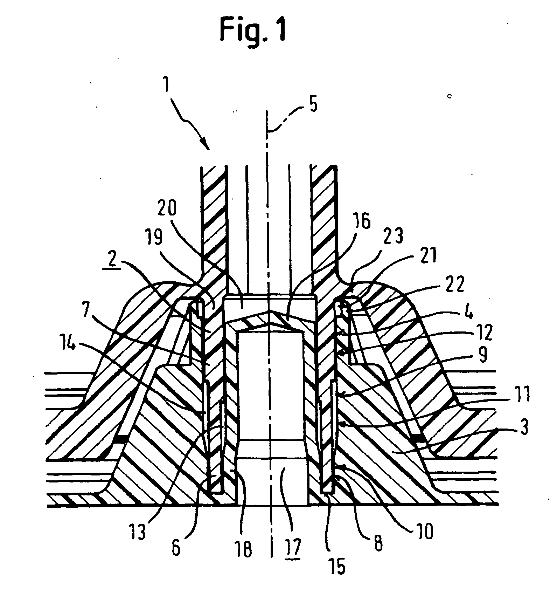

Das in Fig. 1 dargestellte Gleitlager 1 weist einen Gleitring 2 und eine Gleitringaufnahme 3 auf, wobei der Gleitring 2 im Wesentlichen hohlzylindrisch ausgebildet ist und die Gleitringaufnahme 3 eine rotationssymmetrische Ringnut 4 aufweist, in der der Gleitring 2 drehbar gelagert ist. Der Gleitring 2 weist entlang seiner mit der Ringnut 4 gemeinsamen Symmetrieachse 5 einen schmaleren ersten 6 und einen breiteren zweiten Ringabschnitt 7 auf. Die Ringnut 4 weist entlang der Symmetrieachse 5 ebenfalls einen schmaleren ersten 8 und einen breiteren zweiten Nutabschnitt 9 auf.

Die Ringabschnitte 6, 7 und die Nutabschnitte 8, 9 sind so angeordnet, dass in einem ersten Lagerabschnitt 10 der schmale Ringabschnitt 6 in dem schmalen Nutabschnitt 8, in einem zweiten Lagerabschnitt 11 der schmale Ringabschnitt 6 in dem breiten Nutabschnitt 9 und in einem dritten Lagerabschnitt 12 der breite Ringabschnitt 7 in dem breiten Nutabschnitt 9 angeordnet ist. Im ersten Lagerabschnitt 10 können die inneren und äußeren Zylinderflächen des ersten Ringabschnitts 6 drehend an den Nutwangen des ersten Nutabschnitts 8 entlang gleiten und im dritten Lagerabschnitt 12 können die inneren und äußeren Zylinderflächen des zweiten Ringabschnitt 7 drehend an den Nutwangen des zweiten Nutabschnitts 9 entlang gleiten. Im zweiten Lagerabschnitt 11 sind zwei ringförmige Hohlräume 13, 14 zwischen dem Gleitring und den Nutwangen der Ringnut 4 ausgebildet, die Schmiermitteldepots zum Lagern von Schmierfett bilden.

Der erste Ringabschnitt 6 ist näher an einem Nutgrund 15 der Ringnut 4 angeordnet als der zweite Ringabschnitt 7, sodass der Gleitring 2 sich von oben nach unten verjüngt. Der erste Nutabschnitt 8 ist ebenfalls näher am Nutgrund 15 angeordnet als der zweite Nutabschnitt 9. Dadurch kann der Gleitring 2 beim Zusammenbau des Gleitlagers 1 einfach in die Ringnut 4 eingesetzt werden. Der Übergang zwischen dem ersten Ringabschnitt 6 und dem zweiten Ringabschnitt 7 erfolgt in zwei Stufe, wobei die erste Stufe auf der Innenseite und die zweite auf der Außenseite des Gleitrings 2 ausgebildet ist. Die erste Stufe liegt näher am Nutgrund 15 als die zweite Stufe, sodass der innere ringförmige Hohlraum 13 sich über einen längeren Bereich des zweiten Lagerabschnitts 11 erstreckt als der zweite ringförmige Hohlraum 14.

Die Ringnut 4 umschließt eine mittig angeordnete geschlossene Kegelfläche 16, die durch einen nach oben abgeschlossenen Zapfen 17, der in die Ringnut 4 ragt, gebildet wird. Der Zapfen 17 weist Zapfenwände 18 auf, die die inneren Nutwangen der Ringnut 4 bilden. Der Gleitring 2 bildet einen dritten Ringabschnitt 19, der entlang der Symmetrieachse 5 gesehen nach oben über die Ringnut 4 hinausragt und der zusammen mit der geschlossenen Kreisfläche 13 einen dritten Hohlraum 20 zum Lagern von Schmiermittel ausbildet. Ein vierter Hohlraum 21 für Schmiermittel befindet sich auf der Außenseite des dritten Ringabschnitts 19. Dazu ist oberhalb des zweiten Abschnitts 9 der Ringnut 4 auf Höhe des dritten Hohlraums 20 eine zylindrische Wand 22 mit einem größeren Durchmesser als dem des zweiten Nutabschnitts 9 angeordnet, die den mit dem dritten Ringabschnitt 19 den ringförmigen Hohlraum 21 bildet. Der Hohlraum 21 ist nach oben durch einen sich ausgehend von dem dritten Ringabschnitt 19 horizontal erstreckenden Abschnitt 23 abgedeckt.

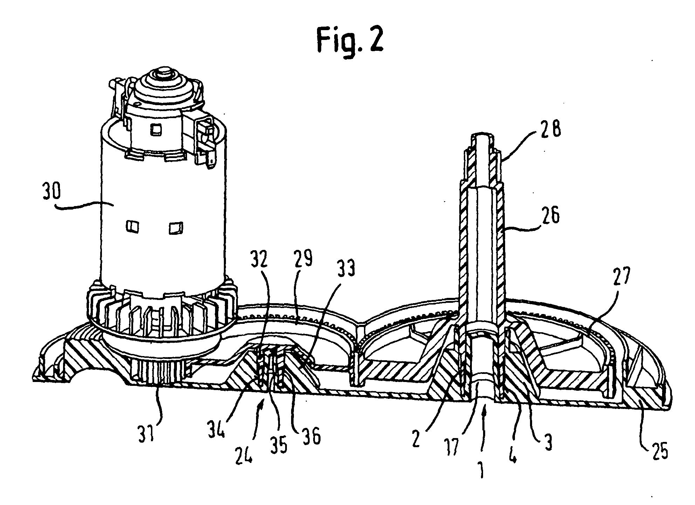

Fig. 2 zeigt als erstes Ausführungsbeispiel die Antriebseinheit einer Küchenmaschine mit Zahnradantrieb. Sind weist zwei erfindungsgemäße Gleitlager auf, ein erstes Gleitlager 1 wie in Fig. 1 beschrieben und ein zweites Gleitlager 24, die in einem Bodenelement 25 der Küchenmaschine angeordnet sind. Das erste Gleitlager 1 dient der Lagerung einer Abtriebswelle 26 eines Abtriebszahnrades 27 der Küchenmaschine. Gleitlager 1, Abtriebswelle 26 und Abtriebszahnrad 27 sind einstückig miteinander verbunden. Mit der Abtriebswelle 26 kann ein Werkzeug (nicht gezeigt) zur Bearbeitung von Nahrungsmitteln rotierend angetrieben werden. Hierzu ist die Abtriebswelle 26 mit einem weiteren Zahnrad 28 in der Nähe ihres oberen Endes ausgestattet. Das zweite Gleitlager 24 dient der Lagerung eines Zwischenzahnrads 29 und ist mit diesem ebenfalls einstückig verbunden. Über das Zwischenzahnrad 29 steht ein erstes von einem Elektromotor 30 angetriebenes Zahnrad 31 mit dem Abtriebszahnrad 28 in Antriebsverbindung.

Auch das zweite Gleitlager 24 weist einen im Wesentlichen hohlzylindrischen Gleitring 32 mit einem schmaleren und einem breiteren Ringabschnitt und eine Gleitringaufnahme 33 mit einer rotationssymmetrischen Ringnut 34 mit einem schmaleren und einem breiteren Nutabschnitt auf. Der Gleitring 32 ist so in der Ringnut 34 angeordnet, dass in einem Abschnitt des Gleitlagers 24 der schmale Ringabschnitt in dem breiten Nutabschnitt angeordnet ist, um zwei ringförmige Hohlräume 35, 36 zum Lagern von Schmierfett zwischen dem Gleitring 32 und den Nutwangen der Ringnut 34 zu bilden.

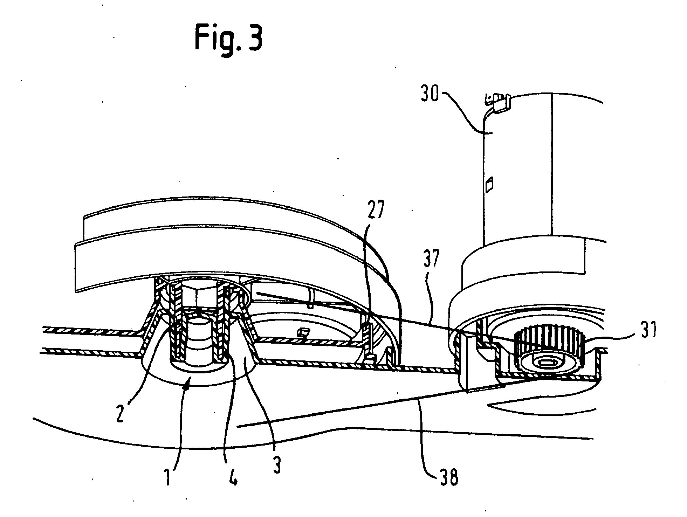

Fig. 3 zeigt als zweites Ausführungsbeispiel die Antriebseinheit einer Küchenmaschine mit Riemenantrieb. Die Antriebseinheit weist ein Gleitlager 1, wie in Fig. 1 beschrieben zur Lagerung einer Abtriebswelle 26 auf, wobei von dem Gleitlager 1 nur der Gleitring 2 gezeigt ist, der in der Ringnut 4 drehbar gelagert ist. Das mit dem Gleitring 2 des Gleitlagers 1 verbundene zweite Zahnrad 27 ist mit dem Zahnrad 31 des Motors 30 mittels eines Zahnriemens, der in Figur 3 nur durch Linien 37, 38 angedeutet ist, antriebsmäßig verbunden. Der Zahnriemen ersetzt das Zwischenzahnrad 28 des ersten Ausführungsbeispiels.

Die Zahnräder 24, 27, 31 mit den Gleitringen 2, 32 und die Bodenplatten 25 mit den Gleitringaufnahmen 3, 22 sind aus Polyamid-Recyclat gefertigt.

Die Erfindung ermöglicht die besonders einfache Konstruktion eines Gleitlagers mit Schmiermitteldepot, alleine mit an das zu lagernde Zahnrad und die Bodenplatte angeformten Elementen auskommt. Insbesondere ist kein Lagerstift erforderlich. Diese einfache Konstruktion vereinfacht die Herstellung und senkt die Herstellungskosten des Haushaltsgeräts.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

## Patentansprüche

1. Gleitlager (1) zum drehbaren Lagern einer Welle (26) in einem Haushaltsgerät umfassend einen rotationssymmetrischen, im Wesentlichen hohlzylindrischen Gleitring (2) und eine Gleitringaufnahme (3) mit einer rotationssymmetrischen Ringnut (4), in der der Gleitring (2) drehbar gelagert ist, **dadurch gekennzeichnet, dass** der Gleitring (2) in der Ringnut (4) entlang seiner Symmetrieachse (5) einen ersten Ringabschnitt (6) aufweist, in dem der Gleitring (2) schmaler ist als in einem zweiten Ringabschnitt (7), und/oder die Ringnut (4) entlang ihrer Symmetrieachse (5) einen ersten Nutabschnitt (8) aufweist, in dem die Nut (4) schmaler ist als in einem zweiten Nutabschnitt (9).

2. Gleitlager (1) nach Anspruch 1, **dadurch gekennzeichnet, dass** der Gleitring (2) in der Ringnut (4) entlang seiner Symmetrieachse (5) einen ersten Ringabschnitt (6) aufweist, in dem der Gleitring (2) schmaler ist als in einem zweiten Ringabschnitt (7), und die Ringnut (4) entlang ihrer Symmetrieachse (5) einen ersten Nutabschnitt (8) aufweist, in dem die die Nut (4) schmaler ist als in einem zweiten Nutabschnitt (9).

3. Gleitlager (1) nach Anspruch 2, **dadurch gekennzeichnet, dass** die Nutabschnitte (8, 9) und Ringabschnitte (6, 7) so angeordnet sind, dass in einem ersten Lagerabschnitt (10) der schmale Ringabschnitt (6) in dem schmalen Nutabschnitt (8), in einem zweiten Lagerabschnitt (11) der schmale Ringabschnitt (6) in dem breiten Nutabschnitt (9) und in einem dritten Lagerabschnitt (12) der breite Ringabschnitt (7) in dem breiten Nutabschnitt (9) angeordnet ist.

4. Gleitlager (1) nach Anspruch 2 oder 3, **dadurch gekennzeichnet, dass** der erste Ringabschnitt (6) näher am Nutgrund (15) der Ringnut (4) angeordnet ist als der zweite Ringabschnitt (7) und der erste Nutabschnitt (8) näher am Nutgrund (15) der Ringnut (4) angeordnet ist als der zweite Nutabschnitt (9).

5. Gleitlager (1) nach einem der vorherigen Ansprüche, **dadurch gekennzeichnet, dass** die Ringnut (4) einen mittig angeordneten Zapfen (17) mit einer geschlossenen oberen Fläche (16) umschließt und der Gleitring (2) einen dritten Ringabschnitt (19) oberhalb der Ringnut (4) aufweist, um zusammen mit der geschlossenen oberen Fläche (16) des Zapfens (17) ein Schmiermitteldepot (20) oberhalb der Ringnut (4) zu bilden.

6. Gleitlager (1) nach Anspruch 5, **dadurch gekennzeichnet, dass** an der Ringnut (4) oberhalb des zweiten Nutabschnittes (9) an diesen anschließend ein achsparallel zur Symmetrieachse (5) verlaufender Wandabschnitt (22) angeordnet ist, und ein radialer Hohlraum (21) zwischen dem dritten Ringabschnitt (19) und dem Wandabschnitt (22) zur Aufnahme von Schmiermittel gebildet wird.

7. Gleitlager (1) nach Anspruch 5 oder 6, **dadurch gekennzeichnet, dass** der Gleitring (2) oberhalb seines dritten Ringabschnittes (19) ein den radialen Hohlraum (21) nach oben abdeckenden sich senkrecht zur Symmetrieachse (5) erstreckendes Wandelement (23) aufweist.

8. Gleitlager (1) nach einem der vorherigen Ansprüche, **dadurch gekennzeichnet, dass** der Gleitring (2), das Wandelement (22) und die Abtriebswelle (26) einstückig ausgebildet sind oder der Gleitring (2) und das Wandelement (22) drehfest mit der Abtriebswelle (26) koppelbar sind und die Ringnut (4) in einem Bodenelement (25) des Haushaltsgerätes angeordnet ist.

9. Gleitlager (1) nach einem der vorherigen Ansprüche, **dadurch gekennzeichnet, dass** der Gleitring (2) und die Ringnut (4) aus einem Kunststoff gefertigt sind, wobei der Kunststoff des Gleitlagers (3) und der Ringnut (4) gleiche oder unterschiedliche Kunststofftypen umfassen kann.

10. Haushaltsgerät mit einem Gleitlager (1) nach einem der vorherigen Ansprüche.

11. Haushaltsgerät nach Anspruch 10, **dadurch gekennzeichnet, dass** es umfasst: ein ein Bodenelement (25) aufweisendes Gehäuse, einen Motor (30) und eine Abtriebswelle (26), die in dem Gleitlager (1) gelagert ist, wobei die Ringnut (4) im Bodenelement (25) ausgebildet ist und der Gleitring (2) einstückig mit einem eine Abtriebswelle (26) aufweisenden Abtriebszahnrad (27) ausgebildet ist.

12. Haushaltsgerät nach Anspruch 11, **dadurch gekennzeichnet, dass** außerdem ein zweites Gleitlager (24) nach einem der Ansprüche 1 bis 9 zur Lagerung einer zweiten Welle vorgesehen ist, wobei das zweite Gleitlager (24) beabstandet von dem ersten Gleitlager (1) angeordnet ist.

13. Haushaltsgerät nach Anspruch 12, **dadurch gekennzeichnet, dass** das zweite Gleitlager (24) ein Zwischenzahnrad (29) lagert, das ein erstes von dem Motor (30) angetriebenes Zahnrad (31) mit einem zweiten, die Abtriebswelle (26) antreibenden Zahnrad (27) antriebsmäßig verbindet.

14. Haushaltsgerät nach Anspruch 13, **dadurch gekennzeichnet, dass** das erste Zahnrad (31), das zweite Zahnrad (27) und das Zwischenzahnrad (24) in einer horizontalen Ebene angeordnet sind und der Durchmesser des ersten Zahnrads (31) kleiner ist als der des zweiten Zahnrads (27).

15. Haushaltsgerät nach Anspruch 11 oder 12, **dadurch gekennzeichnet, dass** die Abtriebswelle (28) mittels eines Zahnriemens (37, 38) mit dem Motor (30) antriebsmäßig gekoppelt ist.

16. Haushaltsgerät nach einem der Ansprüche 11 oder 15, **dadurch gekennzeichnet, dass** eine weitere Abtriebswelle, die achsparallel und beabstandet von der ersten Abtriebswelle (26) angeordnet ist, vorgesehen ist.

## Claims

1. Slide bearing (1) for rotatable mounting of a shaft (26) in a domestic appliance, comprising a rotationally symmetrical, substantially hollow-cylindrical slide ring (2) and a slide ring mount (3) with a rotationally symmetrical annular groove (4) in which the slide ring (2) is rotatably mounted, **characterised in that** the slide ring (2) has in the annular groove (4) and along its axis (5) of symmetry a first ring section (6) in which the slide ring (2) is narrower than in a second ring section (7), and/or the annular groove (4) has along its axis (5) of symmetry a first groove section (8) in which the groove (4) is narrower than in a second groove section (9).

2. Slide bearing (1) according to claim 1, **characterised in that** the slide ring (2) has in the annular groove (4) and along its axis (5) of symmetry a first ring section (6) in which the slide ring (2) is narrower than in a second ring section (7) and the annular groove (4) has along its axis (5) of symmetry a first groove section (8) in which the groove (4) is narrower than in a second groove section (9).

3. Slide bearing (1) according to claim 2, **characterised in that** the groove sections (8, 9) and ring sections (6, 7) are so arranged that in a first bearing section (10) the narrow ring section (6) is arranged in the narrow groove section (8), in a second bearing section (11) the narrow ring section (6) is arranged in the wide groove section (9) and in a third bearing section (12) the wide ring section (7) is arranged in the wide groove section (9).

4. Slide bearing (1) according to claim 2 or 3, **characterised in that** the first ring section (6) is arranged nearer to the groove base (15) of the annular groove (4) than the second ring section (7) and the first groove section (8) is arranged nearer to the groove base (15) of the annular groove (4) than the second groove section (9).

5. Slide bearing (1) according to any one of the preceding claims, **characterised in that** the annular groove (4) surrounds a centrally arranged pin (17) with a closed upper surface (16) and the slide ring (2) has a third ring section (19) above the annular groove (4) in order to form together with the closed upper surface (16) of the pin (17) a lubricant reservoir (20) above the annular groove (4).

6. Slide bearing (1) according to claim 5, **characterised in that** arranged at the annular groove (4) above the second groove section (9) is a wall section (22) which is connected therewith and extends axially parallel to the axis (5) of symmetry, and a radial cavity (21) is formed between the third groove section (19) and the wall section (22) for reception of lubricant.

7. Slide bearing (1) according to claim 5 or 6, **characterised in that** the slide ring (2) has above its third ring section (19) a wall element (23) covering the radial cavity (21) at the top and extending perpendicularly to the axis (5) of symmetry.

8. Slide bearing (1) according to any one of the preceding claims, **characterised in that** the slide ring (2), the wall element (22) and the drive output shaft (26) are of integral construction or the slide ring (2) and the wall element (22) can be coupled with the drive output shaft (26) to be secure against rotation relative thereto and the annular groove (5) is arranged in a base element (25) of the domestic appliance.

9. Slide bearing (1) according to any one of the preceding claims, **characterised in that** the slide ring (2) and the annular groove (4) are made of a plastics material, wherein the plastics material of the slide bearing (3) and the annular groove (4) can comprise the same plastics material type or different plastics material types.

10. Domestic appliance with a slide bearing (1) according to any one of the preceding claims.

11. Domestic appliance according to claim 10, **characterised in that** it comprises: a housing having a base element (25), a motor (30) and a drive output shaft (26) which is mounted in the slide bearing (1), wherein the annular groove (4) is formed in the base element (25) and the slide ring (2) is constructed integrally with a drive output gearwheel (27) having the drive output shaft (26).

12. Domestic appliance according to claim 11, **characterised in that** in addition a second slide bearing (24) according to any one of claims 1 to 9 for mounting a second shaft is provided, wherein the second slide bearing (24) is arranged at a spacing from the first slide bearing (1).

13. Domestic appliance according to claim 12, **characterised in that** the second slide bearing (24) mounts an intermediate gearwheel (29), which drivingly connects a first gearwheel (31) driven by the motor (30) with a second gearwheel (27) driving the drive output shaft (26).

14. Domestic appliance according to claim 13, **characterised in that** the first gearwheel (31), the second gearwheel (27) and the intermediate gearwheel (24) are arranged in a horizontal plane and the diameter of the first gearwheel (31) is smaller than that of the second gearwheel (27).

15. Domestic appliance according to claim 11 or 12, **characterised in that** the drive output shaft (28) is drivingly coupled with the motor (30) by means of a cogged belt (37, 38).

16. Domestic appliance according to one of claims 11 and 15, **characterised in that** a further drive output shaft arranged axially parallel to and at a spacing from the first drive output shaft (26) is provided.

## Revendications

1. Palier à glissement (1) pour le logement rotatif d'un arbre (26) dans un appareil ménager, comprenant un anneau de glissement (2) à symétrie de rotation, essentiellement cylindrique creux, et un logement d'anneau de glissement (3) doté d'une rainure annulaire (4) à symétrie de rotation, dans laquelle l'anneau de glissement (2) est logé de manière rotative, **caractérisé en ce que** l'anneau de glissement (2) présente dans la rainure annulaire (4), le long de son axe de symétrie, une première section d'anneau (6), dans laquelle l'anneau de glissement (2) est plus étroit que dans une deuxième section d'anneau (7), et/ou **en ce que** la rainure annulaire (4) présente le long de son axe de symétrie (5) une première section de rainure (8), dans laquelle la rainure (4) est plus étroite que dans une deuxième section de rainure (9).

2. Palier à glissement (1) selon la revendication 1, **caractérisé en ce que** l'anneau de glissement (2) présente dans la rainure annulaire (4) le long de son axe de symétrie (5) une première section d'anneau (6), dans laquelle l'anneau de glissement (2) est plus étroit que dans une deuxième section d'anneau (7), et **en ce que** la rainure annulaire (4) présente le long de son axe de symétrie (5) une première section de rainure (8), dans laquelle la rainure (4) est plus étroite que dans une deuxième section de rainure (9).

3. Palier à glissement (1) selon la revendication 2, **caractérisé en ce que** les sections de rainure (8, 9) et les sections d'anneau (6, 7) sont disposées de manière à ce que dans une première section de palier (10), la section d'anneau étroite (6) soit disposée dans la section de rainure étroite (8), **en ce que** dans une deuxième section de palier (11), la section d'anneau étroite (6) soit disposée dans la section de rainure large (9) et **en ce que** dans une troisième section de palier (12), la section d'anneau large (7) soit disposée dans la section de rainure large (9).

4. Palier à glissement (1) selon la revendication 2 ou 3, **caractérisé en ce que** la première section d'anneau (6) est disposée plus proche du fond de rainure (15) de la rainure annulaire (4) que la deuxième section d'anneau (7) et **en ce que** la première section de rainure (8) est disposée plus proche du fond de rainure (15) de la rainure annulaire (4) que la deuxième section de rainure (9).

5. Palier à glissement (1) selon l'une quelconque des revendications précédentes, **caractérisé en ce que** la rainure annulaire (4) entoure un tourillon (17) disposé de manière centrale, doté d'une surface supérieure fermée (16), et **en ce que** l'anneau de glissement (2) présente une troisième section de rainure (19) au-dessus de la rainure annulaire (4) afin de former, avec la surface supérieure fermée (16) du tourillon (17), un dépôt de lubrifiant (20) au-dessus de la rainure annulaire (4).

6. Palier à glissement (1) selon la revendication 5, **caractérisé en ce que** sur la rainure annulaire (4) est disposée, au-dessus de la deuxième section de rainure (9) en s'y raccordant, une section de paroi (22) s'étendant de manière parallèle à l'axe de symétrie (5), et **en ce qu'**un espace creux radial (21) est formé entre la troisième section de rainure (19) et la section de paroi (22) pour le logement de lubrifiant.

7. Palier à glissement (1) selon la revendication 5 ou 6, **caractérisé en ce que** l'anneau de glissement (2) présente au-dessus de sa troisième section d'anneau (19) un élément de paroi (23) recouvrant vers le haut l'espace creux radial (21) et s'étendant perpendiculairement à l'axe de symétrie (5).

8. Palier à glissement (1) selon l'une quelconque des revendications précédentes, **caractérisé en ce que** l'anneau de glissement (2), l'élément de paroi (22) et l'arbre de sortie (26) sont réalisés d'une seule pièce ou **en ce que** l'anneau de glissement (2) et l'élément de paroi (22) peuvent être couplés à l'arbre de sortie (26) de manière résistante à la torsion, et **en ce que** la rainure annulaire (4) est disposée dans un élément de fond (25) de l'appareil ménager.

9. Palier à glissement (1) selon l'une quelconque des revendications précédentes, **caractérisé en ce que** l'anneau de glissement (2) et la rainure annulaire (4) sont fabriqués à partir d'une matière plastique, la matière plastique de l'anneau de glissement (3) et de la rainure annulaire (4) pouvant comprendre différents types de matière plastique.

10. Appareil ménager comprenant un palier à glissement (1) selon l'une quelconque des revendications précédentes.

11. Appareil ménager selon la revendication 10, **caractérisé en ce qu'**il comprend : un boîtier présentant un élément de fond (25), un moteur (30) et un arbre de sortie (26) qui est logé dans le palier à glissement (1), la rainure annulaire (4) étant réalisée dans l'élément de fond (25) et l'anneau de glissement (2) étant réalisé d'une seule pièce avec une roue dentée (27) de sortie présentant un arbre de sortie (26).

12. Appareil ménager selon la revendication 11, **caractérisé en ce qu'**en outre un second palier à glissement (24) selon l'une quelconque des revendications 1 à 9 est ménagé pour le logement d'un second arbre, le second palier à glissement (24) étant disposé avec écart du premier palier à glissement (1).

13. Appareil ménager selon la revendication 12, **caractérisé en ce que** le second palier à glissement (24) loge une roue dentée intermédiaire (29) qui raccorde une première roue dentée (31) entraînée par le moteur (30) à une seconde roue dentée (27) entraînant l'arbre de sortie (26).

14. Appareil ménager selon la revendication 13, **caractérisé en ce que** la première roue dentée (31), la seconde roue dentée (27) et la roue dentée intermédiaire (24) sont disposées dans un plan horizontal et **en ce que** le diamètre de la première roue dentée (31) est plus petit que celui de la seconde roue dentée (27).

15. Appareil ménager selon la revendication 11 ou 12, **caractérisé en ce que** l'arbre de sortie (28), du point de vue entraînement, est couplé au moteur (30) au moyen d'une courroie dentée (37, 38).

16. Appareil ménager selon l'une quelconque des revendications 11 ou 15, **caractérisé en ce qu**i est ménagé un arbre de sortie supplémentaire, qui est disposé de manière parallèle à l'axe et avec écart du premier arbre de sortie (26).
